# EUROPÄISCHE PATENTSCHRIFT

(11) **EP 2 181 571 B1**
(45) Veröffentlichungstag und Bekanntmachung des Hinweises auf die Patenterteilung: **24.04.2013**
(21) Anmeldenummer: 08801163.0
(22) Anmeldetag: 14.08.2008
(51) Int. Cl.: H05K 5/00, H02G 3/12, H02G 3/08

(54) **INSTALLATIONS-KASTEN SOWIE VERFAHREN ZUR HERSTELLUNG EINES PLATZES FÜR EINEN INSTALLATIONS-KASTEN**
INSTALLATION CABINET AND METHOD FOR PRODUCING A PLACE FOR AN INSTALLATION CABINET
COFFRET D'INSTALLATION ET PROCÉDÉ POUR RÉALISER UN LOGEMENT DE RÉCEPTION POUR UN COFFRET D'INSTALLATION

(30) Priorität: 25.08.2007 DE 102007040213
(43) Veröffentlichungstag der Anmeldung: 05.05.2010
(73) Patentinhaber: Hager Electro GmbH & Co. KG, 66440 Blieskastel (DE)
(72) Erfinder: DISSEL, Klaus, 66131 Saarbrücken (DE); KESSLER, Franz, 66271 Bliesransbach (DE)
(74) Vertreter: Bernhardt, Reinhold
(86) Internationale Anmeldenummer: PCT/DE2008/001340
(87) Internationale Veröffentlichungsnummer: WO 2009/026885

(56) Entgegenhaltungen:
- WO-A-2007/089682
- AU-A4- 2005 100 136
- DE-A1-102005 025 476
- DE-U1- 20 017 176

## Beschreibung

Die Erfindung betrifft einen Installations-Kasten der elektrischen Gebäudeinstallation, insbesondere einen Zähler- und/oder Verteilerkasten, mit einem Anzeigegerät für die Ausrichtung des Kastens zur Horizontalen und Vertikalen.

Die Erfindung betrifft ferner ein Verfahren zur Herstellung eines Platzes für einen Installations-Kasten für die Unterputzinstallation und dessen Montage.

Ein solcher Installations-Kasten geht aus der AU 2005 100 136 A4 hervor. An einem Gehäuse des Installationskastens ist eine Wasserwaage angeordnet, die sichtbar ist, wenn der Installationskasten mit seiner Rückseite gegen eine Wand gehalten wird, an der der Installationskasten zu installieren ist. Die Wasserwaage ist vorgesehen, um den Installationskasten während seiner Befestigung z.B. durch Schrauben ausrichten zu können.

Die WO 2007/089682 A2 beschreibt eine Baugruppe für ein Kommunikationspaneel, dessen zur Befestigung an einer Montagefläche vorgesehene Rückplatte zur Aufnahme einer Wasserwaage eingerichtet ist.

Installations-Kästen zur Aufnahme von Geräten, wie Stromzählern oder Leitungsschutzschaltern, sind durch Benutzung bekannt. Zu ihrer Montage hält man den Kasten zunächst an eine dafür vorgesehene Stelle einer Wand, an der entsprechende Leitungen verlegt sind, richtet ihn mittels einer Wasserwaage aus, markiert die genaue Stellung und befestigt dann den Kasten. Das gilt für Aufputzsowie für Unterputzinstallation.

Der Erfindung liegt die Aufgabe zugrunde, die die Montage erleichternde Verwendung des Anzeigegeräts für weitere Installationskästen zu ermöglichen.

Diese Aufgabe wird erfindungsgemäß dadurch gelöst, dass der Installationskasten für die Unterputzinstallation eingerichtet ist und das Anzeigegerät zur Verwendung des Installationskastens unter Anlage seiner Vorderseite an der Wand als Schablone von der Rückseite des Kastens aus sichtbar ist.

Der Installationskasten kann so zur Markierung einer Position für eine zur Aufnahme des Installationskastens in einer Wandschale einzuschneidende Öffnung verwendet werden.

Zur Ausrichtung dieses Installations-Kastens benötigt man kein Hilfsmittel, das zusätzlich gehandhabt werden muss. Man hat eine Hand zum Anzeichnen von Markierungen frei oder für Werkzeug zur unmittelbaren Befestigung des Kastens. Der Mehraufwand für das industriell eingesetzte Anzeigegerät, vorzugsweise einfach eine Röhrenlibelle, wird durch die Einsparung an handwerklicher Arbeit mehr als ausgeglichen.

Vorzugsweise ist das Anzeigegerät außerdem von der Vorderseite des Kastens aus sichtbar. So kann es auch zur endgültigen, genauen Ausrichtung des Installations-Kastens verwendet werden, wenn er in die wie angegeben geschnittene oder in eine bereits vorhandene Öffnung eingebaut wird.

In einer Ausgestaltung der Erfindung ist das Anzeigegerät nahe einem Rand, vorzugsweise dem oberen, zur horizontalen Ausrichtung vorgesehenen, Rand des Kastens angeordnet. Man kann den Kasten dann verhältnismäßig bequem halten und das Gerät gut sehen.

In einer weiteren Ausgestaltung der Erfindung weist der Kasten Hilfsmittel zum Umreißen des vorderseitigen Profils der vier Seitenwände des Kastens auf. Zweckmäßigerweise sind diese Hilfsmittel neben den Seitenwänden angeordnete Ausnehmungen, vorzugsweise Schlitze, durch die hindurch mit einem Schreib- oder Zeichengerät eine Markierung angebracht werden kann. Anschließend können die Markierungen miteinander verbunden werden und stellen dann das Profil der Seitenränder dar.
Mit einem Werkzeug, beispielsweise einer Stichsäge, kann entlang der Markierung eine Öffnung in die Wandschale geschnitten werden.

Bei einem Aufputz-Kasten brauche nach seiner Ausrichtung nur die Stellen für die Befestigungsschrauben angezeichnet zu werden.

Die Erfindung wird nachfolgend anhand von Ausführungsbeispielen und der beiliegenden, sich auf diese Ausführungsbeispiele beziehenden Zeichnungen näher erläutert. Es zeigen:
- Fig. 1: einen Ausschnitt der Rückseite eines Installations-Kastens in isometrischer Darstellung,
- Fig. 2: einen Ausschnitt der Vorderseite des Installations-Kasten gemäß Fig. 1 in isometrischer Darstellung,
- Fig. 3: einen Ausschnitt der Vorderseite eines weiteren Installations-Kastens in Draufsicht, und
- Fig. 4: einen Ausschnitt der Vorderseite eines weiteren Installations-Kastens in Draufsicht.

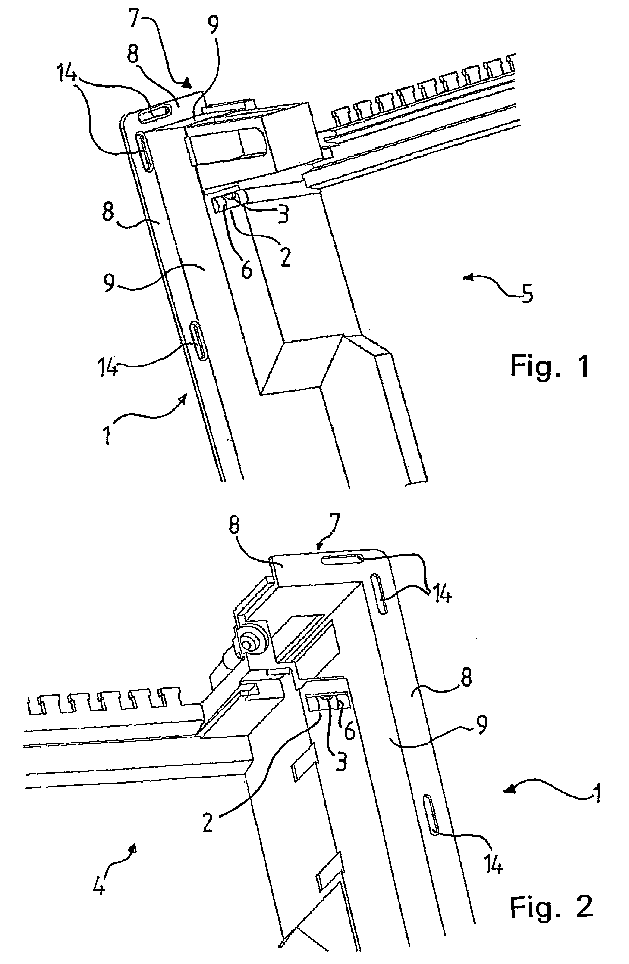

In Fig. 1 ist ein erfindungsgemäßer, mit einer Wasserwaage 2 versehener Installations-Kasten 1 aus Kunststoff dargestellt. Mit den Bezugszeichen 5 und 7 sind die Rückseite bzw. die Vorderseite des Installations-Kastens 1 und mit dem Bezugszeichen 9 seine Seitenwände gekennzeichnet. An der Vorderseite der Seitenwände 9 ist ein von der Seitenwand 9 abstehender, flacher Flansch 8 angeordnet, der zur Anlage an einer Wandschale aus Gipskartonplatten vorgesehen ist. Der Flansch 8 ist mit Ausnehmungen 14 für die Befestigung des Installations-Kastens 1 mit hier nicht gezeigten Schrauben versehen.
Die Wasserwaage 2 ist eine mit Markierungen 6 versehene Röhrenlibelle. Sie ist im Installations-Kasten 1 nahe der von hinten gesehenen linken äußeren Seitenwand 9 und dem oberen Rand 7 angeordnet. Die Luftblase in der Flüssigkeit der Röhrenlibelle ist mit dem Bezugszeichen 3 gekennzeichnet.

Wie in Fig. 2 zu sehen, ist die Wasserwaage 2 an ihren Außenseiten im Installations-Kasten 2 eingelassen und auch von dessen Vorderseite 4 aus sichtbar.

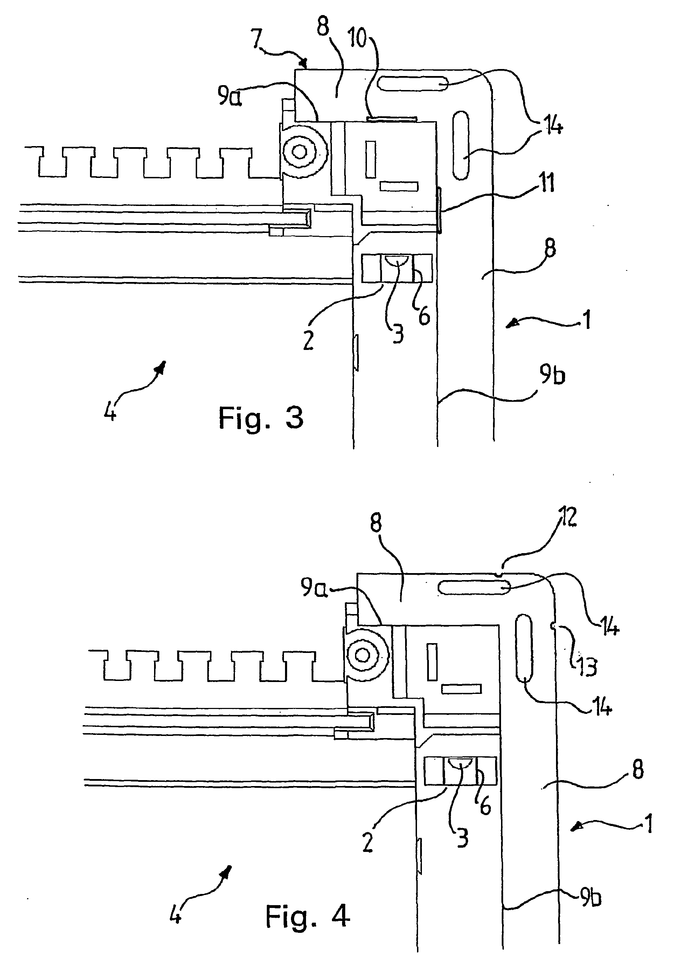

Wie die Fig. 3 erkennen lässt, sind im Flansch 8 des Installations-Kastens 1 neben der oberen horizontalen Seitenwand 9 und der vertikalen Seitenwand 9 Schlitze 10 bzw. 11 eingebracht.

In Fig. 4 sind Einkerbungen 12 und 13 am Außenrand des Flansches 8 gezeigt. Die Einkerbung 12 liegt an der Oberseite 7 des Flansches 8 an der Stelle einer gedachten Verlängerung der Seitenwand 9b. Die Einkerbung 13 liegt auf der rechten Außenseite auf einer gedachten Verlängerung der oberen Seitenwand 9a.
Alternativ können die Lage der Seitenwände 9a und 9b auf dem Rand des Anschlags 8 anstatt von Einkerbungen auch auf andere Weise, z.B. farblich oder durch im Kunststoff eingelassene Markierungen, auf dem Installations-Kasten 1 gekennzeichnet sein.

Zur Herstellung eines Aufnahmeplatzes für einen erfindungsgemäßen Installations-Kasten 1 wird dieser mit seiner Vorderseite, d.h. mit dem Flansch 8 an der Stelle an die Wand gehalten, an der er installiert werden soll. Mit Hilfe der Wasserwaage 2 des Installations-Kastens 1 richtet man diesen horizontal und vertikal an der Wand aus. Ein weiteres Gerät wird dazu nicht benötigt. Man hält den Installations-Kasten 1 mit einer Hand fest und zeichnet, beispielsweise mit einem Bleistift, entlang der Ausnehmungen 10 und 11, die, wie in Fig. 3 gezeigt, an jeder Ecke des Installations-Kastens 1 angebracht sind, eine Markierung an die Wand. Dazu führt man den Stift durch die Schlitze 10 und 11 hindurch. In gleicher Weise markiert man die Befestigungsausnehmungen 14.
Um die nun durch die Schlitze 10 und 11 angebrachten Markierungen miteinander zu verbinden, um an der Wand das Profil der äußeren Seitenwand 9 des Installations-Kastens 1 zu umreißen, verwendet man die Außenseite des Flansches 8 als Lineal.

Alternativ kann die Markierung des Umrisses auch mit Hilfe des in Fig. 4 gezeigten Installations-Kastens 1 gezeichnet werden. Dazu werden an den in jeder Ecke des Installations-Kastens 1 angebrachten Einkerbungen 12,13 mit einem Bleistift Markierungen angebracht. Die jeweils gegenüberliegenden Markierungen werden nach oben beschriebener Weise unter Zuhilfenahme des Installations-Kastens 1 als Lineal durch Bleistiftstriche miteinander verbunden.

Entlang der Markierung kann man beispielsweise mit einer Stichsäge eine Öffnung in die Wandschale sägen und somit einen Steckplatz für den Installations-Kasten 1 bilden.

Der Installations-Kasten 1 wird nun mit seiner Rückseite 5 zuerst in die in die Öffnung eingesetzt und mit Hilfe der jetzt von der anderen Seite aus sichtbaren Wasserwaage genau ausgerichtet. Er wird dann durch die Befestigungsausnehmungen 14 hindurch beispielsweise mit Schrauben an der Wand befestigt.

Die vorstehenden Hilfsmittel zum Anzeichnen der Markierungen sind auch an einem Installations-Kasten ohne Wasserwaage mit Vorteil in der genannten Weise verwendbar.

## Patentansprüche

1. Installations-Kasten der elektrischen Gebäudeinstallation, insbesondere Zähler- und/oder Verteilerkasten, mit einem Anzeigegerät (2) für die Ausrichtung des Kastens (1) zur Horizontalen oder Vertikalen,
**dadurch gekennzeichnet,**
**dass** der Kasten (1) für die Unterputzinstallation eingerichtet ist und das Anzeigegerät (2) zur Verwendung des Installations-Kastens (1) in Anlage seiner Vorderseite an einer Wand als Schablone von der Rückseite (5) des Kastens (1) aus sichtbar ist.

2. Installations-Kasten nach Anspruch 1,
**dadurch gekennzeichnet,**
**dass** das Anzeigegerät (1) eine, vorzugsweise eine Röhrenlibelle (2) aufweisende, Wasserwaage ist.

3. Installations-Kasten nach einem der Ansprüche 1 oder 2 für die Unterputzinstallation,
**dadurch gekennzeichnet,**
**dass** das Anzeigegerät (2) außerdem von der Vorderseite des Kastens (1) aus sichtbar ist.

4. Installations-Kasten nach einem der Ansprüche 1 bis 3,
**dadurch gekennzeichnet,**
**dass** das Anzeigegerät (2) nahe einem Rand, vorzugsweise dem oberen Rand (7), des Kastens (1) angeordnet ist.

5. Installations-Kasten nach einem der Ansprüche 1 bis 4,
**dadurch gekennzeichnet,**
**dass** der Kasten (1) Hilfsmittel (10,11;12,13) zur Markierung der vertikalen bzw. horizontalen Lage seiner vier Seitenwände (9a, 9b) an einer Wand aufweist.

6. Installations-Kasten nach Anspruch 5,
**dadurch gekennzeichnet,**
**dass** die Hilfsmittel (10,11;12,13) auf oder in einem der Anlage gegen die Wand dienenden Flansch (8) des Kastens (1) angeordnete Kennzeichnungen oder Ausnehmungen sind.

7. Installations-Kasten nach Anspruch 6,
**dadurch gekennzeichnet,**
**dass** die Ausnehmungen (10,11;12,13) nahe den Seitenwänden (9) des Kastens (1) angeordnete, eine Schablone bildende Schlitze (10,1 1;12,13) sind oder Einkerbungen (12,13) am äußeren Rand des Anschlags (8) sind.

8. Verfahren zur Herstellung eines Platzes für einen Installations-Kasten (1) für die Unterputzinstallation gemäß einem der Ansprüche 5 bis 7 in einer Wandschale, und zu dessen Montage,
**dadurch gekennzeichnet,**
**dass** der Installations-Kasten (1) mit seiner Vorderseite (5) an die Wandschale gehalten wird, unter zu Hilfenahme des Anzeigegeräts (2) ausgerichtet wird, das vorderseitige Profil der vier Seitenwände mit einem Schreib-oder Zeichengerät (15) unter Verwendung der Hilfsmittel (10,1 1;12,13) umrissen wird, entlang des Umrisses unter Verwendung eines Werkzeugs, vorzugsweise einer Stichsäge, in der Wandschale eine Öffnung geschnitten wird und der Kasten (1) mit seiner Rückseite (4) in die Öffnung eingesetzt, mit Hilfe des Anzeigegeräts (2) genau ausgerichtet und an der Wandschale befestigt wird.

## Claims

1. Installation cabinet of an electrical building installation, in particular a meter and/or distributor cabinet, having an indicator device (2) for aligning the cabinet (1) with respect to the horizontal or vertical, **characterized in that** the cabinet (1) is designed to be flush-mounted and the indicator device (2) can be seen from the rear face (5) of the cabinet (1) for use of the installation cabinet (1) as a template with its front face resting against a wall.

2. Installation cabinet according to claim 1, **characterized in that** the indicator device (1) is a spirit level, preferably having a bubble tube (2).

3. Installation cabinet according to either of Claims 1 and 2 to be flush-mounted, **characterized in that** the indicator device (2) can also be seen from the front face (5) of the cabinet (1).

4. Installation cabinet according to one of Claims 1 to 3, **characterized in that** the indicator device (2) is arranged close to an edge, preferably to the upper edge (7), of the cabinet (1).

5. Installation cabinet according to one of Claims 1 to 4, **characterized in that** the cabinet (1) has auxiliary means (10, 11; 12, 13) for marking the vertical or horizontal position of its four side walls (9a, 9b) on one wall.

6. Installation cabinet according to Claim 5, **characterized in that** the auxiliary means (10, 11; 12, 13) are markers or recesses which are arranged on or in a flange (8) of the cabinet (1) which serves to rest against the wall.

7. Installation cabinet according to Claim 6, **characterized in that** the recesses (10, 11; 12, 13) are slots (10, 11; 12, 13) which are arranged close to the side walls (9) of the cabinet (1) and form a template, or are notches (12, 13) on the outer edge of the stop (8).

8. Method for producing a place for an installation cabinet (1) to be flush-mounted according to one of Claims 5 to 7 in a wall shell, and for mounting said installation cabinet, **characterized in that** the installation cabinet (1) is held against the wall shell by way of its front face (5), is aligned with the aid of the indicator device (2), the front-face profile of the four side walls is outlined by a writing or drawing implement (15) using the auxiliary means (10, 11; 12, 13), an opening is cut in the wall shell along the outline using a tool, preferably a jigsaw, and the cabinet (1) is inserted into the opening by way of its rear face (4), exactly aligned with the aid of the indicator device (2), and fixed to the wall shell.

## Revendications

1. Coffret d'installation d'une installation électrique de bâtiment, en particulier coffret de compteur et/ou coffret de distribution, comprenant un appareil indicateur (2) pour l'alignement du coffret (1) par rapport à l'horizontale ou à la verticale,
**caractérisé en ce que**
le coffret (1) est conçu pour l'installation encastrée, et l'appareil indicateur (2) est visible depuis le côté postérieur (5) du coffret (1) pour l'utilisation du coffret d'installation (1) à titre de gabarit en appliquant sa face antérieure contre un mur.

2. Coffret d'installation selon la revendication 1,
**caractérisé en ce que** l'appareil indicateur (1) est un niveau à eau, comprenant de préférence une fiole niveau à bulle (2).

3. Coffret d'installation selon l'une des revendications 1 ou 2 pour l'installation encastrée,
**caractérisé en ce que** l'appareil indicateur (2) est en outre visible depuis le côté antérieur du coffret (1).

4. Coffret d'installation selon l'une des revendications 1 à 3,
**caractérisé en ce que** l'appareil indicateur (2) est agencé proche d'une bordure, de préférence la bordure supérieure (7), du coffret (1).

5. Coffret d'installation selon l'une des revendications 1 à 4,
**caractérisé en ce que** le coffret (1) comprend des moyens auxiliaires (10, 11 ; 12, 13) pour marquer la position verticale ou horizontale de ses quatre parois latérales (9a, 9b) sur un mur.

6. Coffret d'installation selon la revendication 5,
**caractérisé en ce que** les moyens auxiliaires (10, 11 ; 12, 13) sont des marques caractéristiques ou des évidements agencés sur une bride (8) du coffret (1) servant à venir en appui contre le mur.

7. Coffret d'installation selon la revendication 6,
**caractérisé en ce que** les évidements (10, 11 ; 12, 13) sont des fentes (10, 11 ; 12, 13) agencées à proximité des parois latérales (9) du coffret (1) et formant un gabarit, ou des encoches (12, 13) à la bordure extérieure de la butée (8).

8. Procédé pour réaliser une réservation pour un coffret d'installation (1) destiné à l'installation encastrée selon l'une des revendications 5 à 7 dans une coque murale, et pour son montage,
**caractérisé en ce que** l'on maintient le coffret d'installation (1) avec son côté antérieur (5) contre la coque murale, **en ce qu'**on l'oriente en s'aidant de l'appareil indicateur (2), **en ce que** l'on trace le profil du côté antérieur des quatre parois latérales avec un instrument d'écriture ou de dessin (15) en s'aidant des moyens auxiliaires (10, 11 ; 12, 13), on découpe une ouverture dans la coque murale le long du tracé en utilisant un outil, de préférence une scie sauteuse, et l'on met en place le coffret (1) avec son côté postérieur (4) dans l'ouverture, on l'oriente exactement à l'aide de l'appareil indicateur (2), et on le fixe sur la coque murale.
